(19) Europäisches Patentamt
European Patent Office
Office européen des brevets

(11) **EP 4 575 050 A1**

(12) **EUROPEAN PATENT APPLICATION**

(43) Date of publication:
**25.06.2025 Bulletin 2025/26**

(21) Application number: **23218321.0**

(22) Date of filing: **19.12.2023**

(51) International Patent Classification (IPC):
**D01D 4/02** (2006.01)   **D01D 5/088** (2006.01)
**C04B 20/00** (2006.01)   **D01F 6/46** (2006.01)
**E04C 5/07** (2006.01)   **D01F 1/10** (2006.01)
**D01F 8/00** (2006.01)

(52) Cooperative Patent Classification (CPC):
(C-Sets available)
**D01D 5/088; C04B 16/0608; D01D 4/02;**
**D01F 1/10; D01F 6/46; D01F 8/00; E04C 5/073**
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Fare' S.p.A. a socio unico**
**21054 Fagnano Olona (VA) (IT)**

(72) Inventor: **FARE', Rosaldo**
**21054 Fagnano Olona (VA) (IT)**

(74) Representative: **Gislon, Gabriele et al**
**Marietti, Gislon e Trupiano S.r.l.**
**Via Larga, 16**
**20122 Milano (IT)**

(54) **APPARATUS AND PROCESS FOR THE PRODUCTION OF MICROFIBERS**

(57)    A process for producing a polymer fiber having size of less than 1.5 dtex comprises the steps of extruding or co-extruding at least one polymer through a spinning head to form a plurality of filaments which are cooled at a temperature in the range of +20°C to -30°C and a pressure in the range of 2200 Pa to 900 Pa.

Fig. 1

EP 4 575 050 A1

(52) Cooperative Patent Classification (CPC): (Cont.)

C-Sets
**C04B 16/0608, C04B 20/0068**

**Description**

The present invention relates to the field of the production of polymer fibers and specifically to an apparatus and process for the production of microfibers. Microfibers can have linear density up to 0.5 dtex, can be single- or bi-components and exhibit high toughness characteristics to reinforce cement. Microfibers can use olefin, polyamide, polyester polymers (mono and/or copolymers) and the like, optionally with added mineral fillers. Specifically, the present invention relates to manufacturing fibers preferably based on polyolefin such as homo- or co-polymer of polypropylene, which can provide excellent mixing with cement and cementitious mixtures such as concrete.

As known, concrete is a cement-based composite that is significantly brittle and has poor tensile strength compared to, for example, metal materials.

In fact, concrete undergoes shrinkage adaptations during the fluid/plastic phase. Shrinkage is basically due to two combined actions: autogenous shrinkage due to the hydration reaction of cement and drying shrinkage, also called hygrometric shrinkage due to the evaporation of excess hydration water contained in fresh concrete. These two different actions are called "plastic shrinkage".

Therefore, in use, concrete is subject to fissures (cracks) and breaks which decrease its mechanical properties, reduce or jeopardize the strength of the manufactured article, reduce or jeopardize the "durability" of the work and can cause water seepages. If water seeps in, and environmental temperatures drop, the water could freeze and fracture the concrete. Building structures made of concrete (both residential and functional, such as roads and bridges) can therefore be subject to structural failure, with obvious undesirable consequences.

In addition, concrete may have micro-defects formed during its preparation, which can form subsequent cracks upon application of an external load.

In order to improve the mechanical properties of concrete, it is e.g. known to reinforce concrete by dispersing fibrous materials, typically discontinuous, into it. The function performed by the fibers added to the concrete mix is to counteract the internal stresses which are triggered in a manufactured article during hardening or curing and which create the so-called cracking phenomenon. The anti-cracking action of concrete fibers is well known. In some cases, not only the fibers added to the concrete mixture have the ability to prevent and stop the cracking phenomenon, but also have such robustness that they can take on more significant loads of a structural nature.

A fiber particularly suitable to be added to concrete has historically been asbestos fiber. However, subsequent research has demonstrated the harmfulness of asbestos fibers to humans, particularly its carcinogenic properties, so that reinforcing concrete with asbestos is no longer a viable solution.

Alternative solutions led to the use of different fibers, including metal fibers or synthetic fibers.

Metal fibers generally have high cost and are subject to wear in the open environment (particularly in the presence of water or moisture). Moreover, in the event that concrete is used to pave portions of roads or anyway portions intended for traveling vehicle, metal fibers brought to the surface by the continued use of the pavement can damage the tires of traveling vehicles.

The synthetic fibers used are, for example, polyolefins, polyacrylonitrile, polyamides and homo- and co-polymers of polyester. Among polyolefins, a material particularly suitable for making synthetic reinforcing fibers for cement, both anti-cracking and structural, is homo- and co-polymer of polypropylene (PP) by virtue of its chemical-physical and mechanical properties.

Fibers used are classified as macro-fibers or micro-fibers according to their size; fibers with an average diameter of 300 microns are considered macro-fibers, and those with an average diameter of 20 microns are called micro-fibers. Cement fibers normally used are obtained by spinning processes which produce fibers whose minimum size is typically up to about 2 dtex, i.e. 16.8 microns in diameter or 52.7 microns in circumference.

The effect of the fibers on the cement is also related to the interaction between the surface of the polyolefin fibers and the cement. The fibers have the function of anchoring the concrete when micro-cracks begin to form in the cement matrix in order to reduce crack formation.

A problem with the use of synthetic fibers as an admixture for concrete and cementitious mixtures is due to the difficulty of achieving good and uniform mixing of the fibers within the cement paste, i.e., mixture. In particular, there are limits to the weight amount of polyolefin fibers that can be added to a cement matrix, over which the mixture is inhomogeneous with aggregation of fibers with each other.

Thus, it is a purpose of the present invention to provide an apparatus and method for producing a monofilament microfiber for cement. A further purpose of the invention is to propose a monofilament polyolefin reinforcing fiber for concrete, specifically homo- and copolymer of polypropylene, which has good mixing with cement paste.

These and other purposes are achieved by the present invention according to one or more of the appended claims.

Specifically, an apparatus according to claim 1, a microfiber production method according to claim 8 and a fiber according to claim 14 are object of the present invention. Preferred aspects are set forth in the dependent claims.

In particular, according to an aspect of the present invention, an apparatus for the production of polymer microfibers for cement reinforcement comprises a spinning head which comprises a plurality of holes for polymer output, extruding means to extrude or co-extrude one or more polymers to form a plurality of filaments, and a cooling zone of the filaments extruded from the spinning head, characterized in that said cooling zone comprises maintaining means to maintain the gas in said zone at a temperature in the range of +20°C to -30°C and means adapted to maintain a pressure in the range of 2200 Pa to 900 Pa within said cooling zone.

According to an aspect, the temperature in the cooling zone is in the range of +15°C to -28°C.

According to an aspect of the invention, the temperature maintaining means comprise supplying means to supply a gas having the required temperature.

In a preferred embodiment, the pressure in the cooling zone is in the range of 1000 Pa to 2000 Pa.

In a preferred embodiment, the cooling zone extends for a length between 0.25 and 1.50 meters, preferably between 0.30 and 1.30 meters.

Advantageously, the diameter of the extrusion holes is in the range of 0.12 to 0.80 mm, preferably of 0.15 to 0.70 mm.

The process of the invention allows the production of a polymer fiber, preferably a polyolefin fiber which, in the case of polypropylene, has linear density of less than 1.5 dtex, preferably between 0.5 and 0.99 dtex.

The process comprises the steps of extruding or co-extruding at least one polymer through a spinning head comprising a plurality of holes to form a plurality of filaments, cooling said filaments in a cooling zone and subsequently processing said cooled filaments to form a plurality of fibers, and is characterized in that said filaments are cooled in a cooling zone at a temperature in the range of +20°C to -30°C and in that a pressure within said cooling zone is maintained in the range of 2200 Pa to 900 Pa.

Preferably, the cooling temperature is in the range of +15°C to -28°C.

In a preferred embodiment, the pressure is in the range of 1000 Pa to 2000 Pa.

The cooled filaments leave said cooling zone for their subsequent processing through an opening, said opening being the only free opening of said cooling zone.

A further object of the invention is a synthetic fiber as obtainable by the process and with an apparatus according to the invention, characterized in that its size is in the range of 0.4 dtex to 1.0 dtex, preferably between 0.5 and 0.99 dtex.

In an embodiment, the fiber contains at least one filler material such that the relative density of at least part of said synthetic fiber is greater than 1. In an embodiment, the fiber is a bi-component fiber.

The filler material is typically an inert material having a sufficiently high specific gravity or relative density to achieve the results discussed above after it has been added to the polymeric material used for filament extrusion or co-extrusion. For example, the filler material has density greater than 1 $g/cm^3$, e.g. greater than 2.5 $g/cm^3$. In general, quantity and type (and thus density) of the filler material are chosen so that the final synthetic fiber has density greater than 1 $g/cm^3$. Preferred materials for the filler material are selected, for example, from barium sulfate and oxide, calcium carbonate, titanium oxide and similar inert mineral fillers. Preferred materials are barite, i.e. barium sulfate, and barium oxide.

The filler may be present in the entire polymer material or, in the case of bi-component fiber, in only one of the co-extruded polymer components. More details on the manufacture of filled bi-component fibers can be found in Italian Patent Application No. 102023000015999 in the name of the present Applicant, filed on 07/28/2023 and incorporated herein by reference.

The invention provides many advantages. As a matter of fact, it allows the production of 0.5 dtex mono- and bi-component microfibers with high toughness characteristics to reinforce cement by using mono- and/or copolymer of olefin, polyamide, polyester and the like.

Specifically, microfibers according to the invention made of polypropylene with 0.5-dtex linear density have a circumference of 26.4 microns and a diameter of 8.4 microns; a 2.0-dtex fiber of the same polymer has a circumference of 52.7 microns and a diameter of 16.8 microns.

The conversion from dtex to fiber diameter in microns is done with the well-known formula:

$$diameter\ (microns) = \sqrt{dtex}\ K$$

where K = 11.89.

The surface of the fiber in contact with the cement is significantly increased by adopting, instead of one 2.0 dtex fiber, four 0.5 dtex fibers having the same weight compared to the single fiber with a 2 dtex linear density. As a matter of fact, four 0.5 dtex polypropylene microfibers provide a surface in contact with the cement of 105.6 microns versus 52, 7 microns of the 2 dtex fiber, i.e., the weight being the same, the 0.5 dtex fibers provide about twice as much contact surface with cement as those fibers having 2.0 dtex linear density.

The invention will now be described with reference to the attached figure showing an illustrative and non-limiting embodiment of the present invention, where:

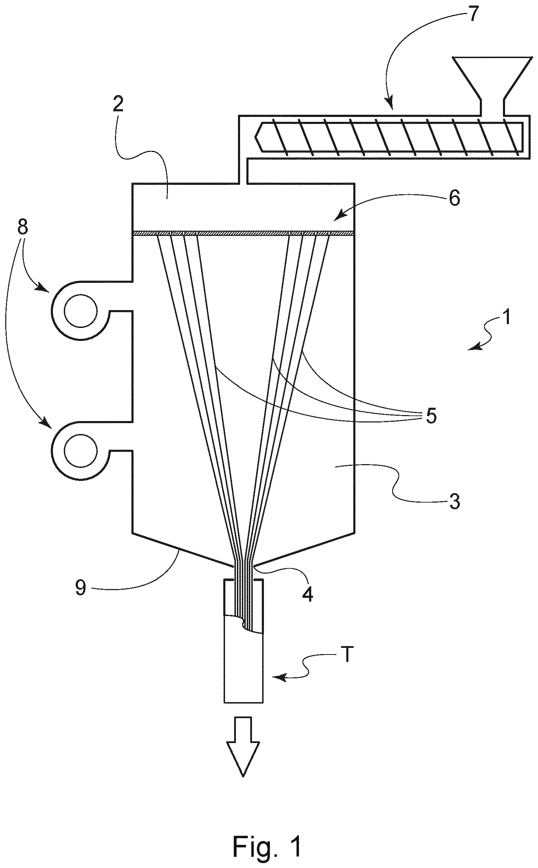

-   fig. 1 is a schematic and partial cross-sectional view of a microfiber production apparatus according to the invention.

Referring to Fig. 1, the apparatus for producing polymer microfibers for cement reinforcement comprises a spinning head 2 which comprises a plurality of holes 6 for polymer output, at least one extruder or other extruding means 7 to extrude a polymer, e.g., polypropylene, or to co-extrude multiple polymers, to form a plurality of filaments exiting through holes 6 and a cooling zone 3 to cool the filaments 5 extruded from the spinning head 2.

The apparatus provides that said cooling zone 3 comprises maintaining means to maintain the gas in said zone at a temperature in the range of +20°C to -30°C and maintaining means adapted to maintain a pressure within said cooling zone in the range of 2200 Pa to 900 Pa (Pascal).

Preferably, the temperature in the cooling zone is in the range of+15°C to -28°C and the pressure is in the range of 1000 to 2000 Pa (Pascal).

In an embodiment, the temperature maintaining means comprise supplying means 8 to supply a gas having the required temperature or otherwise a temperature adapted to cool the cooling zone to the desired temperature.

As can be seen in Fig. 1, the cooling zone 3 is made in the form of a container which extends vertically in the extent direction of the filaments 5, which move from the cooling zone or container to other portions of the apparatus where they are drawn and processed to provide filaments or fibers (after being cut) in a manner known per se in the art. In an embodiment, said cooling zone 3 extends for a length between 0.25 and 1.50 meters, preferably between 0.30 and 1.30 meters.

The container forming the cooling zone has a single free opening 4 at its lower portion 9, said opening 4 being intended for the output of the filaments 5 for passing them to the mentioned further portions of said apparatus, which are denoted generically by the reference T.

In an embodiment, the diameter of the extrusion holes 6 on the spinning head 2 is advantageously in the range of 0.12 to 0.80 mm, preferably of 0.15 to 0.70 mm.

The process of the invention allows a polymer, preferably polyolefin, fiber to be produced with a diameter less than or equal to 12 microns, preferably with a diameter in the range of 8.0 microns to 12.0 microns, more preferably between 8.4 microns and 11.8 microns. With a polypropylene fiber and K conversion factor of 11.89, the fibers obtainable with the apparatus described above can have linear density less than 1.03 dtex, preferably between 0.5 and 0.99 dtex.

The process comprises the steps of extruding or co-extruding at least one polymer through the spinning head 2, or spinneret, which comprises a plurality of holes 6 to form a plurality of filaments 5 which are cooled in a cooling zone 3 and subsequently processed to form a plurality of fibers in a manner which is not an object of the present invention.

According to the invention, the filaments are cooled in a cooling zone 3 (typically defined by a cooling container or chamber) to a temperature in the range of +20°C to -30°C, preferably in the range of +15°C to -28°C; the pressure within said cooling zone 3 is maintained at a reduced pressure value in the range of 2200 Pa to 900 Pa, preferably in the range of 1000 to 2000 Pa (Pascal).

The polymer is extruded through holes 6 whose diameter is in the range of 0.12 to 0.80 mm, preferably betweeen 0.15 to 0.70 mm. Advantageously, the polymer is filtered before being extruded through said holes.

Suitable filters are filters having high filtering ability, such as microporous metal filters.

As mentioned above, the cooled filaments leave the cooling zone 3 to be subsequently processed through an opening 4 located at the bottom of the cooling chamber, said opening being the only free opening in the cooling zone. The opening 4 is sized to allow the passage of the filament bundle and preferably has a width between 12 and 20 mm, preferably of about 15 mm.

The processing of the fibers preferably involves cutting them into lengths adapted to be included in cementitious mixtures. Suitable lengths are those in the range of 3 to 60 mm.

As discussed above, a preferred use of the fibers of the invention is for use as an inert material in a cementitious mixture. In use, a cementitious mixture is prepared in a known way by mixing water, cement and inert material, typically sand, coarse sand, gravel and so on, to form a cement paste. A synthetic fiber 1 according to the present invention is added to that cement paste and is dispersed substantially uniformly within the cement paste. In other words, the fibers act as an inert material and are evenly distributed in the mixture along with the other inert materials.

The amount and type of fibers used as an admixture to the cement mixture depend on the final characteristics of the desired concrete.

**Claims**

1. Apparatus for the production of polymer microfibers for cement reinforcement, comprising a spinning head (2) which comprises a plurality of holes (6) for polymer output, extruding means to extrude or co-extrude one or more polymers to form a plurality of filaments, and a cooling zone (3) of the filaments (5) extruded from the spinning head, **characterized in that** said cooling zone comprises maintaining means to maintain the gas in said zone at a temperature in the range of +20°C to -30°C and means adapted to maintain a pressure in the range of 2200 Pa to 900 Pa within said cooling zone.

2. Apparatus (1) according to claim 1, wherein said temperature is in the range of +15°C to -28°C.

3. Apparatus (1) according to claim 1 or 2, wherein said maintaining means to maintain the temperature comprise supplying means to supply a gas having the required temperature.

4. Apparatus (1) according to one of the preceding claims, wherein said pressure is in the range of 1000 Pa to 2000 Pa.

5. Apparatus according to one of the preceding claims, wherein said cooling zone (3) has a single free opening (4), said opening being intended to output the filaments (5) for passing them to further portions of said apparatus for processing said filaments

6. Apparatus according to one of the preceding claims, wherein the diameter of said extrusion holes (6) is in the range of 0.12 to 0.80 mm, preferably of 0.15 to 0.70 mm.

7. Apparatus (1) according to one of the preceding claims, wherein said cooling zone extends for a length between 0.25 and 1.50 meters, preferably between 0.30 and 1.30 meters.

8. Process for the production of a polymer fiber, preferably polyolefin fiber having size of less than 1.5 dtex, preferably between 0.5 and 0.99 dtex, comprising the steps of extruding or co-extruding at least one polymer through a spinning head (2) comprising a plurality of holes (6) to form a plurality of filaments (5), cooling said filaments in a cooling zone (3) and subsequently processing said cooled filaments to form a plurality of fibers, **characterized in that** said filaments are cooled in a cooling zone (3) that is maintained at a temperature in the range of +20°C to -30°C and **in that** a pressure within said cooling zone is maintained in the range of 2200 Pa to 900 Pa.

9. Process according to claim 8, wherein said temperature is in the range of + 15°C to -28°C.

10. Process according to claim 8 or 9, wherein said pressure is in the range of 1000 Pa to 2000 Pa.

11. Process according to one of claims 8 to 10, wherein said polymer is extruded through holes (6) whose diameter is in the range of 0.12 to 0.80 mm, preferably of 0.15 to 0.70 mm.

12. Process according to one of claims 8 to 11, wherein said cooled filaments leave said cooling zone (3) for their subsequent processing through an opening (4), said opening being the only free opening of said cooling zone.

13. Process according to one of claims 8 to 12, wherein said polymer is filtered before being extruded through said holes.

14. Synthetic fiber as obtainable by a process according to one of claims 8 to 13, with an apparatus according to one of claims 1 to 7, **characterized in that** its size is in the range of 0.4 dtex to 1.0 dtex, preferably of 0.5 to 0.99 dtex.

15. Synthetic fiber according to claim 14, wherein at least one filler material is dispersed therein such that the relative density of at least part of said synthetic fiber is greater than 1.

16. Synthetic fiber according to one of claims 14 or 15, wherein said fiber is a bi-component fiber.

Fig. 1

Europäisches
Patentamt

European
Patent Office

Office européen
des brevets

## EUROPEAN SEARCH REPORT

**Application Number**

EP 23 21 8321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/172816 A1 (PEREZ MARIO A [US] ET AL) 21 November 2002 (2002-11-21) * paragraphs [0006], [0007], [0011], [0018], [0020], [0087], [0088] * ----- | 1-16 | INV. D01D4/02 D01D5/088 C04B20/00 D01F6/46 E04C5/07 D01F1/10 D01F8/00 |
| X | WO 2006/006330 A1 (TOYO BOSEKI [JP]; SAKAMOTO GODO [JP] ET AL.) 19 January 2006 (2006-01-19) * paragraphs [0006], [0007], [0011], [0018], [0042], [0087], [0089] * ----- | 1-16 | |
| X | US 2017/217835 A1 (CUI JING [DE] ET AL) 3 August 2017 (2017-08-03) * paragraphs [0001], [0002], [0022], [0054]; example 1 * ----- | 1-16 | |

|  |
|---|
| **TECHNICAL FIELDS SEARCHED (IPC)** |
| D01D C04B D01F |

The present search report has been drawn up for all claims

| Place of search | Date of completion of the search | Examiner |
|---|---|---|
| The Hague | 31 May 2024 | Van Beurden-Hopkins |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 8321

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | | Publication date | Patent family member(s) | | Publication date |
|---|---|---|---|---|---|
| US 2002172816 | A1 | 21-11-2002 | AT | E276387 T1 | 15-10-2004 |
| | | | DE | 60105649 T2 | 22-09-2005 |
| | | | EP | 1352115 A1 | 15-10-2003 |
| | | | JP | 2004523667 A | 05-08-2004 |
| | | | US | 6420024 B1 | 16-07-2002 |
| | | | US | 2002172816 A1 | 21-11-2002 |
| | | | WO | 02052076 A1 | 04-07-2002 |
| WO 2006006330 | A1 | 19-01-2006 | JP | 4524644 B2 | 18-08-2010 |
| | | | JP | 2006045755 A | 16-02-2006 |
| | | | WO | 2006006330 A1 | 19-01-2006 |
| US 2017217835 | A1 | 03-08-2017 | AU | 2015330399 A1 | 06-04-2017 |
| | | | CN | 107074654 A | 18-08-2017 |
| | | | EP | 3006609 A1 | 13-04-2016 |
| | | | EP | 3204541 A1 | 16-08-2017 |
| | | | JP | 2017531744 A | 26-10-2017 |
| | | | US | 2017217835 A1 | 03-08-2017 |
| | | | WO | 2016055192 A1 | 14-04-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102023000015999